# EUROPÄISCHE PATENTANMELDUNG

(11) **EP 4 614 072 A1**
(43) Veröffentlichungstag der Anmeldung: **10.09.2025**
(21) Anmeldenummer: 25155571.0
(22) Anmeldetag: 03.02.2025
(51) Int. Cl.: F24C 14/00, B01F 21/20, A21B 3/00

(54) **BAUGRUPPE ZUR ANORDNUNG IN EINEM KÜCHEN- UND/ODER GASTRONOMIEGERÄT**

(30) Priorität: 07.03.2024 DE 102024106601
(71) Anmelder: WELBILT Deutschland GmbH, 82436 Eglfing (DE)
(72) Erfinder: TIETZE, Georg, 82431 Kochel am See (DE); FISCHHABER, Herbert, 82380 Peißenberg (DE); SIEBERT, Sebastian, 83115 Neubeuern (DE); WILD, Hannes, 82418 Riegsee (DE)
(74) Vertreter: Hoefer & Partner Patentanwälte mbB

(57) **Zusammenfassung**

Die Erfindung betrifft eine Baugruppe (1) zur Anordnung in einem Küchen- und/oder Gastronomiegerät (100), insbesondere Gargerät, umfassend: zumindest eine Feststoff-Einheit (2) mit: einer Aufnahme (3) zum Einschieben einer mit festem Zusatzstoff gefüllten Flasche (200) entlang einer Einschubrichtung (4), einer zur Aufnahme (3) führenden Zuleitung (5) zum Zuführen eines, den Zusatzstoff ablösenden Fluids, und einer von der Aufnahme (3) abführenden Ableitung (6) zum Abführen des Fluids samt abgelöstem Zusatzstoff, und zumindest eine betätigbare Flaschenfixierung (10), die dazu ausgebildet ist, in einem Fixierzustand die zumindest eine Flasche (200) in der jeweiligen Aufnahme (3) zu fixieren und in einem Freigabezustand die zumindest eine Flasche (200) zum Herausziehen entgegen der Einschubrichtung (4) freizugeben.

## Beschreibung

Die Erfindung betrifft eine Baugruppe zur Anordnung in einem Küchen- und/oder Gastronomiegerät, insbesondere Gargerät. Ferner betrifft die Erfindung das Küchen- und/oder Gastronomiegerät umfassend die Baugruppe.

Ein derartige Baugruppe ist aus der US10767871 B2 bekannt. Hier wird eine Reinigungsvorrichtung für gewerbliche Gargeräte aufgeführt. Die Reinigungsvorrichtung weist eine Anschlusseinheit, insbesondere einen Aufnahmestutzen, zur Aufnahme eines Behälters mit einem Feststoff-Reinigungsmittel, eine Verflüssigungseinrichtung zur Verflüssigung des Feststoff-Reinigungsmittels, gegebenenfalls unter Einsatz eines Lösungsmittels, und optional zumindest einen ersten Vorratstank auf.

Es ist Aufgabe vorliegender Erfindung, eine Baugruppe zur Anordnung in einen Küchen- und/oder Gastronomiegerät anzugeben, die bei einfacher Herstellung einen wartungsarmen Betrieb und eine zuverlässige Reinigung des Küchen- und/oder Gastronomiegeräts ermöglicht.

Die Lösung dieser Aufgabe erfolgt durch die Merkmale des unabhängigen Anspruchs. Die abhängigen Ansprüche haben bevorzugte Ausgestaltungen der Erfindung zum Gegenstand.

Die Erfindung zeigt eine Baugruppe für ein Küchen- und/oder Gastronomiegerät. Dieses Gerät ist insbesondere für den gewerblichen Einsatz in der Gastronomie oder für den häuslichen Gebrauch in einer Küche ausgebildet. Bei dem Gerät handelt es sich vorzugsweise um ein Gargerät. Beispielsweise ist das Gerät als Kombi-Dämpfer ausgebildet. Alternativ kann das Gerät bspw. als Warmhalteofen oder Backoffen ausgestaltet sein.

Um die Funktion und den Aufbau der erfindungsgemäßen Baugruppe besser verstehen zu können, wird zunächst der Aufbau des ebenfalls beanspruchten und erfindungsgemäßen Küchen- und/oder Gastronomiegerätes erklärt, in dem die Baugruppe zur Anwendung kommt. Dieses Küchen- und/oder Gastronomiegerät umfasst einen Lebensmittelraum zur Behandlung und/oder Aufbewahrung von Lebensmitteln. Besonders bevorzugt umfasst das Gerät ein Gehäuse, wobei innerhalb des Gehäuses der Lebensmittelraum angeordnet ist. Sofern das Gerät als Gargerät ausgebildet ist, kann der Lebensmittelraum auch als Garraum bezeichnet werden. In oder an dem Lebensmittelraum befindet sich vorzugsweise eine Heiz-/ Umlufteinheit, die es ermöglicht, den Lebensmittelraum zu heizen und/oder mit Umluft zu beaufschlagen. Insbesondere kann mittels der Heiz-/Umlufteinheit auch Dampf erzeugt werden, um mittels des Dampfes die Lebensmittel im Lebensmittelraum zu behandeln.

Des Weiteren umfasst das Küchen- und/oder Gastronomiegerät einen Sammelbehälter zur Bevorratung einer flüssigen Waschflotte. Der Sammelbehälter befindet sich vorzugsweise unterhalb des Lebensmittelraums. Besonders bevorzugt ist eine Rückführung vorgesehen, die es ermöglicht, die Waschflotte aus dem Lebensmittelraum zurück in den Sammelbehälter zu führen. Die Rückführung kann als Ablaufkanal ausgestaltet sein, der vom Lebensmittelraum in den Sammelbehälter führt.

Der Sammelbehälter ist über eine Waschflotten-Leitung mit dem Lebensmittelraum verbunden. Diese Waschflotten-Leitung ist zum Leiten der Waschflotte aus dem Sammelbehälter in den Lebensmittelraum ausgebildet und angeordnet. Besonders bevorzugt ist eine Waschflotten-Pumpe vorgesehen, die die Waschflotte durch die Waschflotten-Leitung bis in den Lebensmittelraum fördert. Insbesondere ist das Küchen- und/oder Gastronomiegerät dazu ausgebildet, die Waschflotte im Lebensmittelraum an die Wände des Lebensmittelraums zu verteilen, um so den Lebensmittelraum zu reinigen. Am Boden des Lebensmittelraums fließt die Waschflotte zusammen und kann über die beschriebene Rückführung wieder in den Sammelbehälter geführt werden.

Zum Herstellen der Waschflotte wird Frischwasser mit einem Zusatzstoff angereichert. Bei diesem Zusatzstoff kann es sich bspw. um einen Reiniger oder um einen Entkalker oder einen Klarspüler handeln. Im Rahmen vorliegender Erfindung ist vorgesehen, dass der Zusatzstoff bei Raumtemperatur nicht flüssig, sondern fest ist und sich in einer Flasche befindet. Unter "festem" Zusatzstoff wird vorzugsweise auch "gelförmiger" Zusatzstoff verstanden. Der Zusatzstoff kann somit auch als nicht fließfähiger und nicht rieselfähiger Stoff beschrieben werden. In der Flasche ist Zusatzstoff für mehrere Reinigungsvorgänge bevorratet, sodass immer nur ein Teil des Zusatzstoffes aus der Flasche abgelöst werden muss.

Das Küchen- und/oder Gastronomiegerät umfasst zumindest eine Zuleitungs-Pumpe zum Pumpen des Fluids, vorzugsweise der Waschflotte, durch eine Zuleitung der im folgenden beschriebenen Baugruppe.

Die Erfindung zeigt eine Baugruppe zur Anordnung in dem Küchen- und/oder Gastronomiegerät, insbesondere wie es vorab beschrieben wurde. Die Baugruppe umfasst zumindest eine Feststoff-Einheit.

Die Feststoff-Einheit weist eine Aufnahme zum Einschieben der Flasche auf. Diese Flasche ist mit dem beschriebenen, festen Zusatzstoff gefüllt. Die Flasche ist in die Aufnahme entlang einer Einschubrichtung einschiebbar.

Des Weiteren weist die Feststoff-Einheit die erwähnte Zuleitung auf. Diese Zuleitung führt zur Aufnahme und ist dazu ausgebildet ein Fluid, insbesondere Wasser bzw. die beschriebene Waschflotte, zum Ablösen des Zusatzstoffes zuzuführen. Die Flasche wird insbesondere mit ihrer Öffnung voran in die Aufnahme eingeschoben. Am hinteren Ende der Aufnahme befindet sich die Zuleitung die das Fluid auf den Feststoff in der Flasche spritzt. Hierzu kann die Zuleitung auch in die Flasche hineinragen.

Ferner umfasst die Feststoff-Einheit eine Ableitung, die angeordnet ist, um das Fluid samt abgelöstem Zusatzstoff von der Aufnahme abzuführen, insbesondere in Richtung des oben beschriebenen Sammelbehälters.

Wie noch im Detail beschrieben wird, kann die hier definierte Baugruppe zumindest zwei der Feststoff-Einheiten aufweisen, wobei in jede Feststoff-Einheit eine eigene Flasche eingeschoben werden kann. Dadurch ist es bspw. möglich in die eine Aufnahme einen Klarspüler und in die andere Aufnahme ein Reinigungsmittel einzustecken.

Ferner umfasst die Baugruppe eine Flaschenfixierung. Wie noch im Detail beschrieben wird, ist vorzugsweise eine einzelne Flaschenfixierung für zwei Feststoff-Einheiten, also für zwei Flaschen, vorgesehen. Dabei befindet sich die Flaschenfixierung zwischen den beiden Feststoff-Einheiten und somit zwischen den beiden Flaschen.

Die Flaschenfixierung der Baugruppe ist "betätigbar". Dies bedeutet, dass die Flaschenfixierung durch eine Betätigung - beispielsweise durch Drücken oder durch Wegnahme des Drucks - zwischen einem Fixierzustand und einem Freigabezustand wechseln kann. Wie noch im Detail beschrieben wird, erfolgt diese Betätigung der Flaschenfixierung insbesondere manuell durch einen Benutzer, insbesondere durch ein händisches Drücken auf die Flaschenfixierung und wieder wegnehmen des Drucks.

Die Flaschenfixierung ist dazu ausgebildet, im Fixierzustand die zumindest eine Flasche, vorzugsweise zwei nebeneinander angeordnete Flaschen, in der zugehörigen Aufnahme zu fixieren. Ferner ist die Flaschenfixierung dazu ausgebildet, im Freigabezustand die zumindest eine Flasche, insbesondere die beiden nebeneinander angeordneten Flaschen, zum Herausziehen entgegen der Einschubrichtung freizugeben. Wird die Flaschenfixierung also in den Freigabezustand betätigt, kann die zumindest eine Flasche aus ihrer Aufnahme entgegen der Einschubrichtung herausgezogen werden. Befindet sich die Flaschenfixierung allerdings in ihrem Fixierzustand, so ist die zumindest eine Flasche in ihrer Aufnahme fixiert und kann sich nicht entgegen der Einschubrichtung bewegen. Dies hat insbesondere einen großen Vorteil bei einer nicht eingeschraubten, sondern lediglich die in die Aufnahme eingeschoben Flasche. Durch das Ausspülen des Feststoffes über die beschriebene Zuleitung mit entsprechendem Wasserdruck, entsteht eine Kraft auf die Flasche entgegen der Einschubrichtung. Dies kann bei entsprechend hohem Druck dazu führen, dass die Flasche ohne der Flaschenfixierung aus der Aufnahme herausgedrückt wird.

Die Flaschenfixierung umfasst vorzugsweise ein Gehäuse. Das Gehäuse kann insbesondere aus einer Oberschale und einer Unterschale zusammengesetzt sein. Das Gehäuse ist vorzugsweise an der Aufnahme der Feststoff-Einheit befestigt, bspw. verschraubt. Bei Verwendung von zwei Feststoff-Einheiten sind zwei Aufnahmen vorgesehen. Die Flaschenfixierung kann dabei über ihr Gehäuse mit beiden Aufnahmen verbunden sein. Des Weiteren ist auch bevorzugt vorgesehen, dass die beiden Aufnahmen zweier benachbarter Feststoff-Einheiten einteilig ausgeführt sind, sodass bspw. ein Kunststoffbauteil beide Aufnahmen bildet. In diesem Fall kann das Gehäuse der Flaschenfixierung insbesondere an einem solchen gemeinsamen Kunststoffbauteil befestigt sein.

Des Weiteren umfasst die Flaschenfixierung vorzugsweise zumindest ein Halteelement. Bei Verwendung der Flaschenfixierung zwischen zwei Feststoff-Einheiten sind insbesondere zwei gegenüberliegende Halteelemente vorgesehen. Das zumindest eine Halteelement ist beweglich, insbesondere über ein Drehlager drehbeweglich, am Gehäuse gelagert.

Des Weiteren ist bevorzugt vorgesehen, dass das Halteelement dazu ausgebildet ist, im Fixierzustand formschlüssig und/oder kraftschlüssig die Flasche zu fixieren. Besonders bevorzugt ist das Halteelement so ausgebildet, dass es an der Flasche anliegt. In einer alternativen Ausgestaltung muss es nicht zwangsläufig zu einem direkten Kontakt zwischen Halteelement und Flasche kommen. Deshalb ist auch vorgesehen, dass das Halteelement dazu ausgebildet ist, im Fixierzustand eine weitere Vorrichtung zu betätigen, die wiederrum formschlüssig und/oder kraftschlüssig die Flasche fixiert.

In bevorzugter Ausführung ist vorgesehen, dass die Flaschenfixierung ein Blockierelement umfasst. Das Blockierelement ist am Gehäuse beweglich gelagert, insbesondere linear beweglich. Auch bei Verwendung von zwei Halteelementen ist insbesondere nur ein Blockierelement vorgesehen. Dieses Blockierelement befindet sich dann vorzugsweise zwischen den beiden Halteelementen und betätigt gleichzeitig beide Halteelemente.

So ist das Blockierelement dazu ausgebildet, im Fixierzustand eine Bewegung des zumindest einen Halteelements zu blockieren, insbesondere formschlüssig zu blockieren. Ferner ist das Blockierelement dazu ausgebildet im Freigabezustand die Bewegung des zumindest einen Halteelements freizugeben.

Besonders bevorzugt ist vorgesehen, dass bei einer Betätigung vom Freigabezustand in den Fixierzustand das Blockierelement das zumindest eine Halteelement bewegt.

Besonders bevorzugt weist das zumindest eine Halteelement einen äußeren Hebelabschnitt und einen inneren Hebelabschnitt auf. Zwischen den beiden Hebelabschnitten ist das einzelne Halteelement drehbeweglich im Gehäuse gelagert. Der innere Hebelabschnitt befindet sich im Fixierzustand in Kontakt mit dem Blockierelement. Insbesondere blockiert das Blockierelement den inneren Hebelabschnitt formschlüssig.

Bei Verwendung von zwei gegenüberliegenden Halteelementen ragen entsprechend zwei innere Hebelabschnitte in das Innere des Gehäuses. Das Blockierelement ist dabei vorzugsweise Gabelförmig ausgestaltet und umgreift im Fixierzustand die beiden inneren Hebelabschnitte, sodass die beiden inneren Hebelabschnitte sich nicht nach außen bewegen können, was wiederrum zur Folge hat, dass die äußeren Hebelabschnitte nicht nach innen, in Richtung des Gehäuses klappen können.

In bevorzugter Ausführung ist vorgesehen, dass zwischen dem Blockierelement und dem inneren Hebelabschnitt eine schiefe Ebenen-Anordnung vorgesehen ist. Diese ist dazu ausgebildet, dass Halteelement in den die Flasche fixierenden Zustand zu drängen. Solch eine schiefe Ebenen-Anordnung beschreibt, dass das Blockierelement und der innere Hebelabschnitt aneinander gleiten, wobei zumindest auf einer Seite des Gleitkontakts eine schiefe Ebene vorgesehen ist. Dadurch kann bei einer Bewegung des Blockierelements in den Fixierzustand der innere Hebelabschnitt bewegt werden.

Im Freigabezustand ist es möglich, durch Herausziehen der jeweiligen Flasche das Halteelement zu bewegen, da dies nicht mehr durch das Blockierelement blockiert ist. Allerdings ist es auch wünschenswert, dass das Halteelement, insbesondere der äußere Hebelabschnitt, in einer Stellung verbleibt, die ein erneutes Einschieben einer frisch gefüllten Flasche nicht blockiert. Hierzu ist bevorzugt vorgesehen, dass das zumindest eine Halteelement im Freigabezustand mittels einer Anschlag-Anordnung und/oder einer Rückstellfeder und/oder einer weiteren schiefen Ebenen-Anordnung in den die Flasche freigebenden Zustand drängbar ist. Durch solch eine Anschlag-Anordnung und/oder Rückstellfeder und/oder weitere schiefe Ebenen-Anordnung kann erreicht werden, dass das Halteelement den Weg zum Einschieben der neuen Flasche freigibt.

Die Anschlag-Anordnung umfasst vorzugsweise eine erste Anschlagfläche am Betätigungselement (das noch im Detail beschrieben wird) und eine zweite Anschlagfläche am Halteelement. Die beiden Anschlagflächen kommen beim Betätigen des Betätigungselements in Kontakt, sodass es zum Betätigen des Hebelelements in die gewünschte Richtung kommt.

Die Rückstellfeder kann bspw. als Drehfeder im Bereich des Drehlagers des Halteelements angeordnet werden.

Die weitere schiefe Ebenen-Anordnung beschreibt vorzugsweise einen gleitenden Kontakt zwischen einem Betätigungselement (das noch im Detail beschrieben wird) und dem Halteelement. An zumindest einer der beiden Elemente befindet sich dabei eine schiefe Ebene, sodass es bei einer Relativbewegung zum Betätigen des Hebelelements in die gewünschte Richtung kommt.

Ferner ist bevorzugt vorgesehen, dass die Flaschenfixierung einen Kraftspeicher umfasst. Dieser Kraftspeicher ist insbesondere als Feder ausgebildet. Bei der Feder handelt es sich insbesondere um eine Spiralfeder. Der Kraftspeicher drängt die Flaschenfixierung in den Fixierzustand. Bei einer Betätigung vom Fixierzustand in den Freigabezustand wird der Kraftspeicher somit geladen.

Die Flaschenfixierung umfasst bevorzugt ein Betätigungselement. Dieses Betätigungselement ist zum Versetzen der Flaschenfixierung in den Freigabezustand ausgebildet. Insbesondere ist das Betätigungselement derart ausgebildet, sodass es durch seine Betätigung die Flaschenfixierung in den Freigabezustand versetzt und dabei gleichzeitig den beschriebenen Kraftspeicher lädt, wobei vorzugsweise keine Verrastung oder sonstige Festsetzung im Freigabezustand erfolgt, sondern durch ein Loslassen des Betätigungselementes (Wegnehmen des Drucks) sich der Kraftspeicher entspannt, um die Flaschenfixierung in den Fixierzustand zu drängen.

Bevorzugt ist vorgesehen, dass das Betätigungselement zur händischen, werkzeuglosen Betätigung angeordnet und ausgebildet ist. Insbesondere wird das Betätigungselement durch Eindrücken mit der Hand, insbesondere einem Finger, betätigt.

Bevorzugt ist vorgesehen, dass das Betätigungselement linear beweglich im Gehäuse angeordnet ist.

Bevorzugt ist vorgesehen, dass das Betätigungselement zum Verschieben des Blockierelements ausgebildet ist. Hierzu kann das Betätigungselement an dem Blockierelement anliegen, um das Blockierelement zu drücken. Besonders bevorzugt ist jedoch vorgesehen, dass das Blockierelement und das Betätigungselement fest miteinander verbunden sind oder zusammen als ein Teil gefertigt sind.

Ferner ist bevorzugt vorgesehen, dass das Betätigungselement einen Kopf und einen Verbindungsabschnitt aufweist, Insbesondere ragt der Verbindungsabschnitt vom Kopf bis zum Blockierelement. Vorzugsweise befindet sich das zumindest eine Halteelement zwischen Kopf und Blockierelement. Besonders bevorzugt ist der Verbindungsabschnitt einteilig mit dem Kopf gefertigt. Des Weiteren ist bevorzugt vorgesehen, dass der Verbindungsabschnitt mit dem Blockierelement fest verbunden ist, insbesondere einteilig ausgeführt ist.

Das Blockierelement weist vorzugsweise einen Fortsatz auf, auf dem der Kraftspeicher, ausgebildet als Spiralfeder, sitzt.

Besonders bevorzugt umfasst die Flaschenfixierung ein einzelnes Spritzgussbauteil aus Kunststoff, dass das Betätigungselement samt Kopf- und Verbindungsabschnitt, das Blockierelement und den Fortsatz bildet.

Wie bereits erwähnt, sind bevorzugt zwei Feststoff-Einheiten vorgesehen, wobei die Flaschenfixierung zwischen den beiden Feststoff-Einheiten angeordnet ist und dazu ausgebildet ist, im Fixierzustand beide Flaschen gleichzeitig zu fixieren und/oder im Freigabezustand beide Flaschen gleichzeitig freizugeben.

Des Weiteren ist bevorzugt vorgesehen, dass die Aufnahme der zumindest einen Feststoff-Einheit zum gewindelosen Einstecken der Flasche ausgebildet ist. Hierzu weist die Aufnahme bevorzugt eine Dichtung auf, durch die ein Öffnungsbereich der Flasche hindurchschiebbar ist.

Die Flaschenfixierung umfasst vorzugsweise ein Sperrelement. Dieses Sperrelement ist dazu ausgebildet, in einem Sperrzustand eine Betätigung der Flaschenfixierung in den Freigabezustand zu sperren. Ferner ist das Sperrelement dazu ausgebildet, in einem nicht gesperrten Zustand die Betätigung der Flaschenfixierung in den Freigabezustand nicht zu sperren.

Es werden drei unterschiedliche Sperrelemente beschrieben, von denen vorzugsweise nur eines verwendet wird. Es können aber auch zwei oder alle drei der Sperrelemente an einer Flaschenfixierung verwendet werden.

Das erste Sperrelement ist insbesondere dazu ausgebildet, durch elektromotorischen oder elektromagnetischen Antrieb, in einen Bewegungsbereich der Flaschenfixierung einzugreifen, um die Betätigung der Flaschenfixierung zu sperren. Insbesondere kann mit dem ersten Sperrelement eine Bewegung des Blockierelements und/oder des Betätigungselements gesperrt werden.

Besonders bevorzugt ist vorgesehen, dass das erste Sperrelement zur Betätigung in den Sperrzustand und/oder in den nicht gesperrten Zustand ansteuerbar ist. Dies erfolgt insbesondere elektrisch oder elektronisch. Für die Ansteuerung des ersten Sperrelementes wird vorzugsweise ein Steuergerät des Küchen- und/oder Gastronomiegerätes verwendet. So ist es möglich, dass nur bestimmten Benutzern und/oder nur bei bestimmten Zuständen des Gerätes ein Wechsel der Flaschen ermöglicht wird. Zum Beispiel kann über die Eingaben eines Passworts oder Codes das Sperrelement freigeben werden. Somit ist sichergestellt, das unbefugtes oder ungeschultes Personal keinen Wechsel der Flaschen durchführen können.

Das zweite Sperrelement umfasst vorzugsweise einen Schließzylinder im Betätigungselement. Durch Drehen des Schließzylinders mit einem Schlüssel kann ein sperrendes Bauteil aus dem Betätigungselement in das Gehäuse ausgefahren werden, um eine Bewegung des Betätigungselements relativ zum Gehäuse zu blockieren.

Das dritte Sperrelement umfasst vorzugsweise ein Vorhängeschloss, dass zwischen Kopf und Gehäuse auf das Betätigungselement einhängbar ist, wodurch der Bügel des Vorhängeschlosses ein Eindrücken des Betätigungselements blockiert.

Weitere Einzelheiten, Vorteile und Merkmale der vorliegenden Erfindung ergeben sich aus nachfolgender Beschreibung eines Ausführungsbeispiels anhand der Zeichnungen. Es zeigen:
Fig. 1 eine perspektivische Vorderansicht einer erfindungsgemäßen Baugruppe gemäß einem Ausführungsbeispiel,
Fig. 2 eine perspektivische Rückansicht der erfindungsgemäße Baugruppe gemäß dem Ausführungsbeispiel,
Fig. 3 eine Draufsicht mit teilweise ausgeblendeten Elementen der erfindungsgemäßen Baugruppe gemäß dem Ausführungsbeispiel,
Fig. 4 eine Flaschenfixierung der erfindungsgemäßen Baugruppe gemäß dem Ausführungsbeispiel,
Fig. 5 die Flaschenfixierung aus Figur 4 im Fixierzustand mit geöffnetem Gehäuse,
Fig. 6 die Flaschenfixierung aus Figur 4 im Freigabezustand mit geöffnetem Gehäuse,
Fig. 7 Details der Flaschenfixierung aus den Figuren 4, 5 und 6,
Fig. 8 eine Explosionsansicht der Flaschenfixierung aus Figur 4, und
Fig. 9 eine schematische Seitenansicht und Frontansicht eines erfindungsgemäßen Küchen- und/oder Gastronomiegerätes mit der erfindungsgemäßen Baugruppe gemäß dem Ausführungsbeispiel.

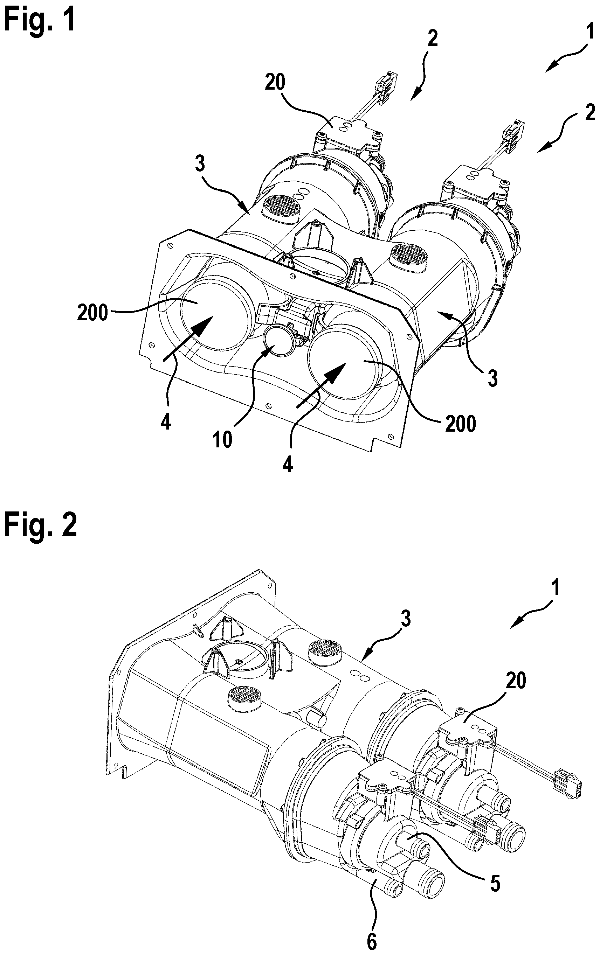

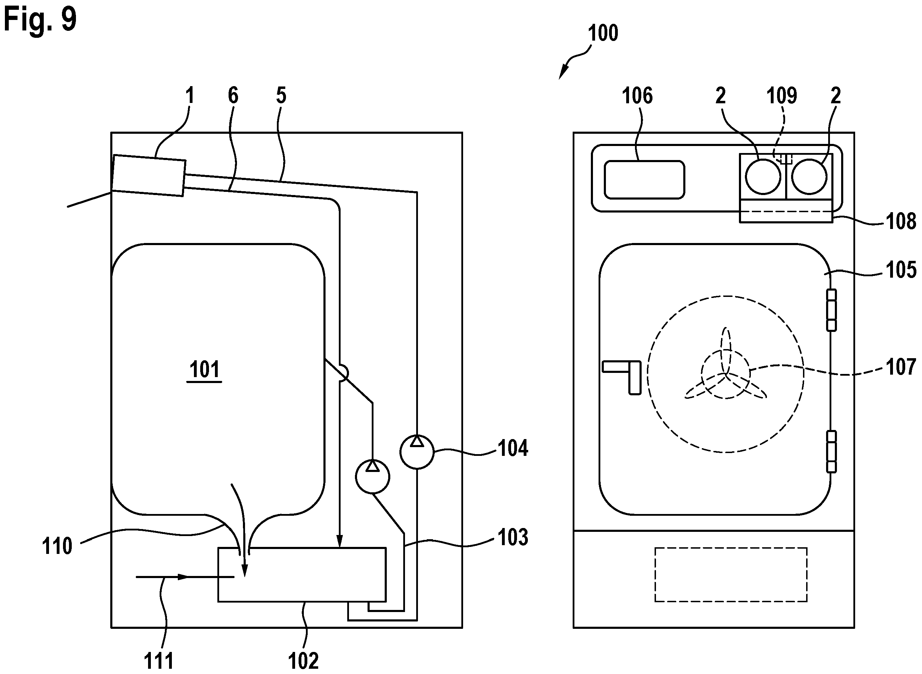

Im Folgenden wird zunächst anhand der Figuren 1 bis 8 eine erfindungsgemäße Baugruppe 1 beschrieben. Diese kommt zur Anwendung in einem Küchen- und/oder Gastronomiegerät 100, wie es schematisch in Figur 9 gezeigt ist. Soweit nicht anders erwähnt, wird im Folgenden stets auf alle Figuren Bezug genommen.

Die Baugruppe 1 umfasst im gezeigten Ausführungsbeispiel zwei Feststoff-Einheiten 2, jeweils mit einer Aufnahme 3. Die beiden Aufnahmen 3 der beiden Feststoff-Einheiten 2 sind im gezeigten Ausführungsbeispiel durch ein gemeinsames Spritzgussteil gebildet.

In jede Aufnahme 3 kann eine mit festem Zusatzstoff gefüllte Flasche 200 entlang einer Einschubrichtung 4 eingeschoben werden.

An der Rückseite der Baugruppe 1, insbesondere in Figur 2 dargestellt, befinden sich pro Feststoff-Einheit 2 eine Zuleitung 5 und eine Ableitung 6, wie dies im allgemeinen Teil der Beschreibung erläutert wurde.

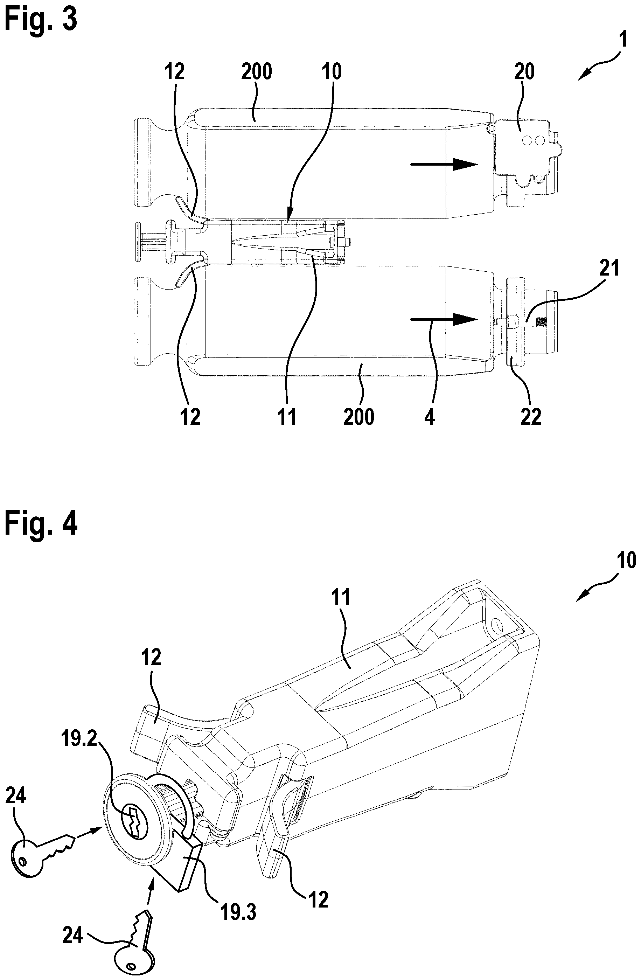

Ferner umfasst die Baugruppe 1 eine Flaschenfixierung 10 zum Fixieren der beiden Flaschen 200 in den beiden Feststoff-Einheiten 2. Figur 1 zeigt die Flaschenfixierung 10 von vorne. In der Darstellung nach Figur 3 sind die Aufnahmen 3 der Feststoff-Einheiten 2 ausgeblendet, sodass ersichtlich ist, dass sich die Flaschenfixierung 10 zwischen den beiden Flaschen 200 befindet. Figur 4 zeigt eine perspektivische Ansicht der Flaschenfixierung 10.

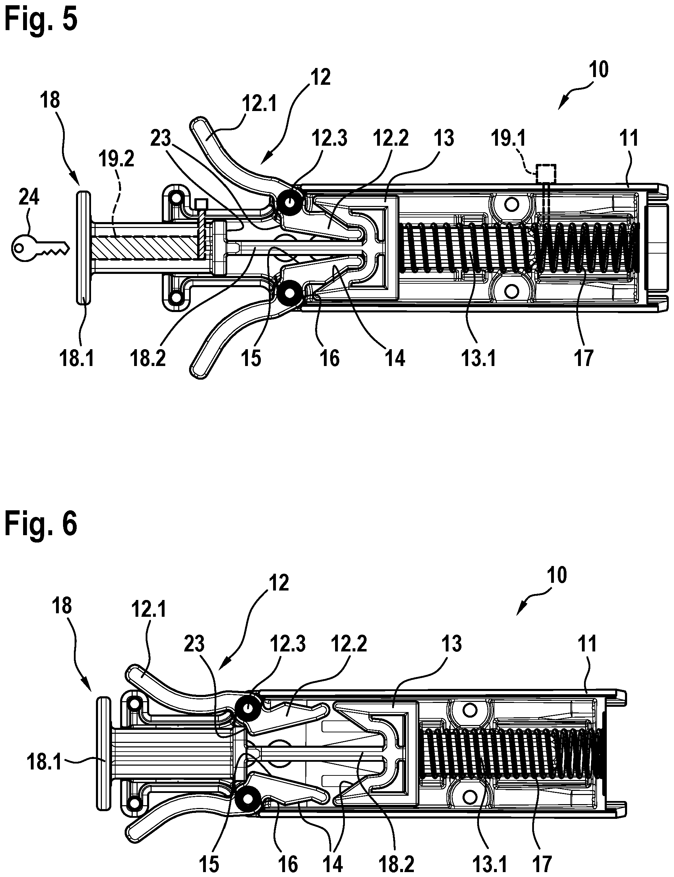

In Figuren 5 und 6 ist die Oberschale eines Gehäuses 11 der Flaschenfixierung 10 ausgeblendet, um so das Innenleben der Flaschenfixierung 10 zu zeigen. Fig. 5 zeigt die Flaschenfixierung aus Figur 4 im Fixierzustand. Fig. 6 zeigt die Flaschenfixierung aus Figur 4 im Freigabezustand mit eingedrücktem Betätigungselement 18.

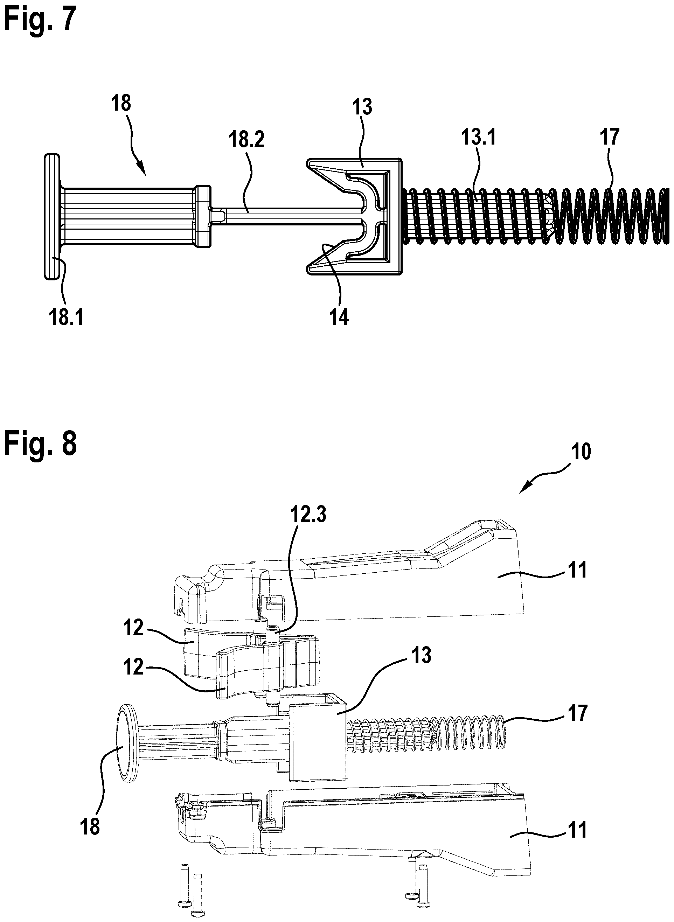

Figur 7 zeigt ein Detail der Flaschenfixierung 10 und in Figur 8 ist eine Explosionsdarstellung der Flaschenfixierung 10 dargestellt.

Die Flaschenfixierung 10 weist zwei Halteelemente 12 auf, die in dem Gehäuse 11 über Drehlager 12.3 drehbeweglich gelagert sind. Jedes Halteelement 12 weist einen äußeren Hebelabschnitt 12.1 und einen inneren Hebelabschnitt 12.2 auf. Das jeweilige Drehlager 12.3 befindet sich zwischen dem äußeren Hebelabschnitt 12.1 und dem inneren Hebelabschnitt 12.2.

Im Inneren des Gehäuses 11 ist ein Blockierelement 13 linearbeweglich gelagert. Das Blockierelement 13 weist einen Fortsatz 13.1 auf. Auf diesem Fortsatz 13.1 steckt ein Kraftspeicher 17, in Form einer Spiralfeder.

Zwischen dem Blockierelement 13 und dem jeweiligen inneren Hebelabschnitt 12.2 befindet sich eine schiefe Ebenen-Anordnung 14, die dazu führt, dass bei einer Bewegung des Blockierelements 13 in den Fixierzustand die beiden inneren Hebelabschnitte 12.2 nach innen gedrückt werden, wodurch die äußeren Hebelabschnitte 12.1 nach außen schwenken und dadurch die Flaschen 200 formschlüssig fixieren.

Ferner umfasst die Flaschenfixierung 10 ein Betätigungselement 18, das sich aus einem Kopf 18.1 und einem Verbindungsabschnitt 18.2 zusammensetzt. Der Verbindungsabschnitt 18.2 reicht dabei von Kopf 18.1 bis zum Blockierelement 13.

Auf den Kopf 18.1 kann mit einem Finger gedrückt werden, um so die Flaschenfixierung 10 zu betätigen. Durch Drücken auf den Kopf 18.1 bewegt sich die Flaschenfixierung 10 in den Freigabezustand, wobei der Kraftspeicher 17 geladen wird.

Insbesondere Figur 7 verdeutlicht, dass das Betätigungselement 18 zusammen mit dem Blockierelement 13 ein gemeinsames Bauteil, insbesondere ein gemeinsames Spritzgussbauteil bildet.

Figuren 5 und 6 zeigen rein schematisch die optionale Verwendung einer Anschlag-Anordnung 23 mit einer ersten Anschlagfläche am Betätigungselement 18 und einer zweiten Anschlagfläche am jeweiligen Halteelement 12; insbesondere am jeweiligen inneren Hebelabschnitt 12.2. Die Anschlagflächen kommen beim Betätigen des Betätigungselements 18 in Kontakt (siehe Fig. 6), sodass die äußeren Hebelabschnitte 12.1 nach innen zu verschwenken.

Zusätzlich oder alternativ können rein schematisch gezeigte Rückstellfedern 16 im Bereich der Drehlager 12.3 verwendet werden. Auch diese Rückstellfedern 16 können dazu verwendet werden, um im Freigabezustand die Halteelemente 12 so zu stellen, dass die Flaschen 20 eingeschoben werden können.

Zusätzlich oder alternativ kann auch eine schematische gezeigte weitere schiefe Ebenen-Anordnung 15 verwendet werden. Dabei ist ein Gleitkontakt zwischen dem Verbindungsabschnitt 18.2 und den innenliegenden Flächen der inneren Hebelabschnitte 12.2 vorgesehen. So ist es möglich, bei Eindrücken des Betätigungselementes 18 eine Kraft auf die inneren Hebelabschnitte 12.2 auszuüben, um so die äußeren Hebelabschnitte 12.1 nach innen zu verschwenken. Auch dadurch kann der Weg zum Einstecken einer Flasche 200 freigegeben werden.

Figuren 4 und 5 zeigen rein schematisch die Verwendung zumindest eines optionalen Sperrelementes, wie es im allgemeinen Teil der Beschreibung erläutert wurde.

Es werden drei unterschiedliche Sperrelemente beschrieben, von denen vorzugsweise nur eines verwendet wird. Es können aber auch zwei oder alle drei der Sperrelemente an einer Flaschenfixierung 10 verwendet werden.

Das erste Sperrelement 19.1 ist insbesondere dazu ausgebildet, durch elektromotorischen oder elektromagnetischen Antrieb, in einen Bewegungsbereich der Flaschenfixierung 10 einzugreifen, um die Betätigung der Flaschenfixierung 10 zu sperren. Insbesondere kann mit dem ersten Sperrelement 19.1 eine Bewegung des Blockierelements 13 und/oder des Betätigungselements 18 gesperrt werden.

Besonders bevorzugt ist vorgesehen, dass das erste Sperrelement 19.1 zur Betätigung in den Sperrzustand und/oder in den nicht gesperrten Zustand ansteuerbar ist. Dies erfolgt insbesondere elektrisch oder elektronisch. Für die Ansteuerung des ersten Sperrelementes 19.1 wird vorzugsweise ein Steuergerät des Küchen- und/oder Gastronomiegerätes 100 verwendet. Fig. 5 zeigt dies rein schematisch.

Das zweite Sperrelement 19.2 umfasst einen Schließzylinder im Betätigungselement 18. Durch Drehen des Schließzylinders mit einem Schlüssel 24 kann ein sperrendes Bauteil aus dem Betätigungselement 18 in das Gehäuse 11 ausgefahren werden, um eine Bewegung des Betätigungselements 18 relativ zum Gehäuse 11 zu blockieren. Fig. 5 zeigt dies rein schematisch. Fig. 4 zeigt rein schematisch die Zugänglichkeit des Schließzylinders über den Kopf 18.1 des Betätigungselements 18.

Das dritte Sperrelement 19.3 - rein schematisch in Fig. 4 gezeigt - umfasst ein Vorhängeschloss, dass zwischen Kopf 18.1 und Gehäuse 11 auf das Betätigungselement 18 einhängbar ist, wodurch der Bügel des Vorhängeschlosses ein Eindrücken des Betätigungselements 18 blockiert.

In Fig. 6 sind die Sperrelemente der Übersichtlichkeit halber nicht gezeigt.

In Figur 3 sind die Aufnahmen 3 der Feststoff-Einheiten 2 ausgeblendet. Zu sehen ist, dass sich im hinteren Bereich der jeweiligen Feststoff-Einheit 2 ein Flaschensensor 20 befindet. Bei der unteren Feststoff-Einheit 2 ist das Gehäuse des Flaschensensors 20 ausgebildet, sodass der innenliegende Sensorstift 21 ersichtlich ist. Dieser Sensorstift 21 wird parallel zur Einschubrichtung 4 durch Einschieben der Flasche 200 und durch Kontakt mit der Flasche 200 betätigt. Über den Flaschensensor 20 ist es möglich, zu erfassen ob die jeweilige Flasche 200 korrekt und weit genug eingeschoben ist.

Ferner zeigt Figur 3, dass in jeder Aufnahme 3 eine Dichtung 22 vorgesehen ist, durch die ein Öffnungsbereich der jeweiligen Flasche 200 hindurchschiebbar ist.

Figur 9 zeigt in rein schematischer Darstellung eine Seitenansicht und eine Frontansicht eines Küchen- und/oder Gastronomiegerätes 100, in dem die Baugruppe 1 zu Anwendung kommt.

Das Küchen- und/oder Gastronomiegerät 100 ist wie im allgemeinen Teil der Beschreibung erläutert aufgebaut. Dementsprechend weist das Küchen- und/oder Gastronomiegerät 100 einen Lebensmittelraum 101 und einen darunterliegenden Sammelbehälter 102 auf. Von dem Sammelbehälter 102 führt eine Waschflotten-Leitung 103 zum Lebensmittelraum 101. In dieser Waschflotten-Leitung 103 kann sich eine Pumpe zum Pumpen der Waschflotte in den Lebensmittelraum 101 befinden.

Aus dem Lebensmittelraum 101 kann die Waschflotte über eine Rückführung 110 in den Sammelbehälter 102 zurückfließen. Um Frischwasser in den Sammelbehälter 102 zuzuführen, ist eine Frischwasser-Zuleitung 111 vorgesehen.

Vom Sammelbehälter 102 führt eine entsprechende Leitung mit einer Zuleitungspumpe 104 bis zu den Zuleitungen 5 der Feststoff-Einheiten 2. Die Ableitungen 6 der Feststoff-Einheiten 2 sind über Leitungen mit dem Sammelbehälter 102 verbunden.

Ferner zeigt Figur 9, dass der Lebensmittelraum 101 über eine Tür 105 verschlossen ist. Im oberen Bereich des Küchen- und/oder Gastronomiegerätes 100 befindet sich eine Bedieneinheit 106 zum Steuern des Gerätes.

Im Lebensmittelraum 101 kann sich eine Heiz-/Umlufteinheit 107 befinden.

Figur 9 zeigt rein schematisch, dass die im oberen Bereich angeordnete Baugruppe 1 über eine Klappe 108 verschlossen werden kann. Ein Klappen-Element 109 kann als Sensor und/oder als Verschluss ausgebildet sein. Bei einer Ausbildung des Klappen-Elementes 109 als Sensor kann erfasst werden, ob die Klappe verschlossen ist. Bei einer Ausbildung des Klappen-Elementes 109 als Verschluss kann die Klappe ansteuerbar verschlossen werden, um so einen Zugriff zu den Flaschen 200 zu gewähren bzw. zu verweigern.

### Bezugszeichenliste

- 1: Baugruppe
- 2: Feststoff-Einheit
- 3: Aufnahme
- 4: Einschubrichtung
- 5: Zuleitung
- 6: Ableitung

- 10: Flaschenfixierung
- 11: Gehäuse
- 12: Halteelement
- 12.1: äußerer Hebelabschnitt
- 12.2: innerer Hebelabschnitt
- 12.3: Drehlager
- 13: Blockierelement
- 13.1: Fortsatz
- 14: schiefe Ebenen-Anordnung
- 15: weitere schiefe Ebenen-Anordnung
- 16: Rückstellfeder
- 17: Kraftspeicher
- 18: Betätigungselement
- 18.1: Kopf
- 18.2: Verbindungsabschnitt
- 19.1: erstes Sperrelement
- 19.2: zweites Sperrelement
- 19.3: drittes Sperrelement
- 20: Flaschensensor
- 21: Sensorstift
- 22: Dichtung
- 23: Anschlag-Anordnung
- 24: Schlüssel

- 100: Küchen- und/oder Gastronomiegerät
- 101: Lebensmittelraum
- 102: Sammelbehälter
- 103: Waschflotten-Leitung
- 104: Zuleitungspumpe
- 105: Tür
- 106: Bedieneinheit
- 107: Heiz-/Umlufteinheit
- 108: Klappe
- 109: Klappen-Element
- 110: Rückführung
- 111: Frischwasser-Zuleitung

- 200: Flasche

## Patentansprüche

1. Baugruppe (1) zur Anordnung in einem Küchen- und/oder Gastronomiegerät (100), insbesondere Gargerät, umfassend:
• zumindest eine Feststoff-Einheit (2) mit:
• einer Aufnahme (3) zum Einschieben einer mit festem Zusatzstoff gefüllten Flasche (200) entlang einer Einschubrichtung (4),
• einer zur Aufnahme (3) führenden Zuleitung (5) zum Zuführen eines, den Zusatzstoff ablösenden Fluids,
• und einer von der Aufnahme (3) abführenden Ableitung (6) zum Abführen des Fluids samt abgelöstem Zusatzstoff,
• und zumindest eine betätigbare Flaschenfixierung (10), die dazu ausgebildet ist, in einem Fixierzustand die zumindest eine Flasche (200) in der jeweiligen Aufnahme (3) zu fixieren und in einem Freigabezustand die zumindest eine Flasche (200) zum Herausziehen entgegen der Einschubrichtung (4) freizugeben.

2. Baugruppe nach Anspruch 1, wobei die Flaschenfixierung (10) umfasst:
• ein Gehäuse (11),
• zumindest ein beweglich, insbesondere drehbar, am Gehäuse (11) gelagertes Halteelement (12),
• wobei das Haltelement (12) dazu ausgebildet ist, im Fixierzustand formschlüssig und/oder kraftschlüssig die Flasche (200) zu fixieren, insbesondere an der Flasche (200) anzuliegen oder dazu ausgebildet ist, im Fixierzustand eine weitere Vorrichtung zu betätigen, die formschlüssig und/oder kraftschlüssig die Flasche (200) fixiert.

3. Baugruppe nach einem der Ansprüche 1 oder 2, wobei die Flaschenfixierung umfasst:
• ein beweglich, insbesondere linear beweglich, am Gehäuse gelagertes Blockierelement (13),
• wobei das Blockierelement (13) dazu ausgebildet ist, im Fixierzustand eine Bewegung des zumindest einen Haltelements (12) zu blockieren, insbesondere formschlüssig zu blockieren, und im Freigabezustand die Bewegung des zumindest einen Haltelements (12) freizugeben.

4. Baugruppe nach den Ansprüchen 2 und 3, wobei das zumindest eine Haltelement (12) einen äußeren Hebelabschnitt (12.1) und einen inneren Hebelabschnitt (12.2) aufweist und zwischen den beiden Hebelabschnitten (12.1, 12.2) drehbeweglich im Gehäuse (11) gelagert ist, wobei der innere Hebelabschnitt (12.2) im Fixierzustand in Kontakt mit dem Blockierelement (13) ist.

5. Baugruppe nach Anspruch 4, wobei zwischen Blockierelement (13) und innerem Hebelabschnitt (12.2) eine schiefe Ebenen-Anordnung (14) zum Drängen des Haltelements (12) in den die Flasche (200) fixierenden Zustand ausgebildet ist.

6. Baugruppe nach einem der Ansprüche 2 bis 5, wobei das zumindest eine Halteelement (12) im Freigabezustand mittels einer Anschlag-Anordnung (23) und/oder einer Rückstellfeder (16) und/oder einer weiteren schiefen Ebene-Anordnung (15) in den die Flasche (200) freigebenden Zustand drängbar ist.

7. Baugruppe nach einem der vorhergehenden Ansprüche, wobei die Flaschenfixierung (10) umfasst:
• einen Kraftspeicher (17), insbesondere ausgebildet als Feder, wobei der Kraftspeicher (17) die Flaschenfixierung (10) in den Fixierzustand drängt.

8. Baugruppe nach einem der vorhergehenden Ansprüche, wobei die Flaschenfixierung (10) umfasst:
• ein Betätigungselement (18), ausgebildet zum Versetzen der Flaschenfixierung (10) in den Freigabezustand;
vorzugsweise:
• wobei das Betätigungselement (18) zur händischen, werkzeuglosen Betätigung angeordnet und ausgebildet ist,
• und/oder wobei das Betätigungselement (18) linearbeweglich im Gehäuse (11) angeordnet ist,
• und/oder wobei das Betätigungselement (18) zum Verschieben des Blockierelements (13) ausgebildet ist,
• und/oder wobei das Betätigungselement (18) und das Blockierelement (13) zusammen als ein Teil gefertigt sind,
• und/oder wobei das Betätigungselement (18) einen Kopf (18.1) und einen Verbindungsabschnitt (18.2) aufweist, wobei der Verbindungsabschnitt (18.2) vom Kopf (18.1) bis zum Blockierelement (13) ragt, insbesondere wobei das zumindest eine Halteelement (12) zwischen Kopf (18.1) und Blockierelement (13) angeordnet ist,
• und/oder wobei das Blockierelement (13) einen Fortsatz (13.1) aufweist, auf dem der Kraftspeicher (17), ausgebildet als Spiralfeder, sitzt.

9. Baugruppe nach einem der vorhergehenden Ansprüche, umfassend zwei der Feststoff-Einheiten (2), wobei die Flaschenfixierung (10) zwischen den beiden Feststoff-Einheiten (2) angeordnet ist und dazu ausgebildet ist, im Fixierzustand beide Flaschen (200) gleichzeitig zu fixieren und/oder im Freigabezustand beide Flaschen (200) gleichzeitig freizugeben.

10. Baugruppe nach den Ansprüchen 1, 2, 3, und 9, wobei die Flaschenfixierung (10) zwei der Haltelemente (12) für die beiden Flaschen (200) und ein gemeinsames Blockierelement (13) zum Blockieren beider Halteelemente (12) umfasst.

11. Baugruppe nach einem der vorhergehenden Ansprüche, wobei die Aufnahme (3) der zumindest einen Feststoff-Einheit (2) zum gewindelosen Einstecken der Flasche (200) ausgebildet ist.

12. Baugruppe nach einem der vorhergehenden Ansprüche, wobei die Flaschenfixierung (10) umfasst:
• ein Sperrelement (19.1, 19.2, 19.3) das dazu ausgebildet ist, in einem Sperrzustand eine Betätigung der Flaschenfixierung (10) in den Freigabezustand zu Sperren und in einem nichtgesperrten Zustand eine Betätigung der Flaschenfixierung (10) in den Freigabezustand nicht zu sperren.

13. Baugruppe nach Anspruch 12, wobei das Sperrelement, nämlich erstes Sperrelement (19.1), zur Betätigung in den Sperrzustand und/oder in den nichtgesperrten Zustand ansteuerbar ist, insbesondere elektrisch oder elektronisch ansteuerbar ist.

14. Küchen- und/oder Gastronomiegerät (100), insbesondere Gargerät, umfassend
• einen Lebensmittelraum (101) zur Behandlung und/oder Aufbewahrung von Lebensmitteln, insbesondere ausgebildet als Garraum,
• einen Sammelbehälter (102) zur Bevorratung einer flüssigen Waschflotte,
• eine Waschflotten-Leitung (103) zum Leiten der Waschflotte aus dem Sammelbehälter (102) in den Lebensmittelraum (101),
• eine Baugruppe (1) nach einem der vorhergehenden Ansprüche, wobei die Ableitung (6) insbesondere in Richtung Sammelbehälter (7) führt,
• zumindest eine Zuleitungs-Pumpe (104) zum Pumpen des Fluids, vorzugsweise der Waschflotte, durch die zumindest eine Zuleitung.
